# EUROPEAN PATENT APPLICATION

(11) **EP 1 246 088 A2**
(43) Date of publication of application: **02.10.2002**
(21) Application number: 02251128.1
(22) Date of filing: 19.02.2002
(51) Int. Cl.: G06F 17/30

(54) **Information retrieval device and service**

(30) Priority: 28.03.2001 JP 2001091636
(71) Applicant: Hitachi, Ltd., Chiyoda-ku, Tokyo (JP)
(72) Inventor: Seki, Yumiko, Hitachi, Ltd., IP Group, Tokyo 100-8220 (JP); Saito, Takashi, Hitachi, Ltd., IP Group, Tokyo 100-8220 (JP); Kito, Masayoshi, Hitachi, Ltd., IP Group, Tokyo 100-8220 (JP); Hagiwara, Osami, Hitachi Systems & Services, Ltd., Tokyo 143-8545 (JP)
(74) Representative: Calderbank, Thomas Roger

(57) **Abstract**

A retrieval device (101) and retrieval service are provided for reserved retrieval of document information, so that, when there are duplicates (401) in retrieval conditions registered by a plurality of users, these duplicates are eliminated from the retrieval conditions (106, 303) to thereby execute efficient retrieval. Copies of information regarding the retrieval result are made (111, 601) correspondingly to the number of the duplicates among the users and the copied information is expanded respectively in accordance with the registered retrieval conditions desired by the users. The expanded information is edited in a form (1101) desired by the user, and the edited result is delivered (114, 115, 703) to a delivery destination such as an e-mail address registered by the user.

## Description

The present invention relates to a method and a device of retrieving information which has been accumulated in databases on a network.

As the background art relating to reserved retrieval from accumulated documents, there is a technique in which a list of appropriate documents is acquired on the basis of retrieval conditions and a retrieval time registered in advance, as disclosed in JP-A-7-334522.

On the other hand, JP-A-6-60121 discloses a method in which batch processing is applied to a plurality of retrieval requests issued by a plurality of users.

In the above-mentioned background-art technique (1), the result of the retrieval is given as a list of documents, so that the contents of the retrieval are notified by electronic mail. However, the technique (1) says nothing about any process in the case where there are duplicates in the notified contents.

On the other hand, the above-mentioned background-art technique (2) says about a method in which retrieval requests issued by a plurality of users respectively are integrated and a retrieval process is carried out thereon in order to enhance the efficiency in retrieval, and a method in which the results of the retrieval are expanded to the users respectively. However, no description has been made on a method of how to increase the efficiency in executing the retrieval process from a large unspecified number of databases on the network, or any specific method of how to expand the results to the users respectively.

The present invention provides a retrieval device in a system having computers and databases connected to one another. The retrieval device includes: a retrieval reservation registering portion for registering retrieval requests from users; a retrieval device portion for retrieving information from the databases on the basis of the contents registered in the retrieval reservation registering portion, and delivering results to the users respectively; and a retrieval processing portion for integrating duplicate retrieval requests in accordance with rules defined in advance, and creating data to be delivered to the users when information is retrieved from the databases.

Further, the present invention provides an information retrieval device including: means for executing reserved retrieval under predetermined retrieval conditions and at a predetermined retrieval time from documents accumulated in a large unspecified number of databases on a network; means for allowing at least one user to register individual retrieval conditions, and maintaining the registered retrieval conditions availably; means for integrating duplicates, creating retrieval conditions and executing the retrieval when the duplicates exist in the registered contents of retrieval conditions among the users; means for making copies of information about acquired retrieval results correspondingly to the duplicates among the users so as to meet the registered retrieval conditions desired by the respective users, and expanding the retrieval results in accordance with the registered retrieval conditions made by the users respectively; and means for eliminating duplicates, if any, from each expanded content, editing the content in a form desired by each user, and delivering the edited result to a mail address or a delivery destination registered by each user. Further, the present invention provides retrieval service using such a retrieval device.

Other objects, features and advantages of the invention will become apparent from the following description of the embodiments of the invention taken in conjunction with the accompanying drawings.

In the drawings:
Fig. 1 is a diagram showing a configuration of a device according to the present invention and the operation of the device as a whole;
Fig. 2 is a diagram showing an example of a screen for registration of retrieval reservation in an embodiment of the present invention;
Fig. 3 is a flow chart of a process of a retrieval condition integrating portion in an embodiment of the present invention;
Fig. 4 is a view showing an example of a list of duplicates in an embodiment of the present invention;
Fig. 5 is a flow chart of a process of a previously retrieved result storage and reference portion in an embodiment of the present invention;
Fig. 6 is a flow chart of a process of a retrieval result delivery portion in an embodiment of the present invention;
Fig. 7 is a flow chart of a process of a user-specific delivery and distribution processing portion in an embodiment of the present invention;
Fig. 8 is a flow chart of a retrieval result duplicate integrating process in an embodiment of the present invention;
Fig. 9 is a diagram for explaining a structure for integrating duplicate retrieval result data in an embodiment of the present invention;
Fig. 10 is a view showing examples of contents of retrieval result data in which duplicates have been integrated in an embodiment of the present invention;
Fig. 11 is a view showing an example of a template for delivery in an embodiment of the present invention; and
Fig. 12 is an example of a delivered electronic mail using a template for delivery in an embodiment of the present invention.

Embodiments according to the present invention will be described below with reference to the drawings.

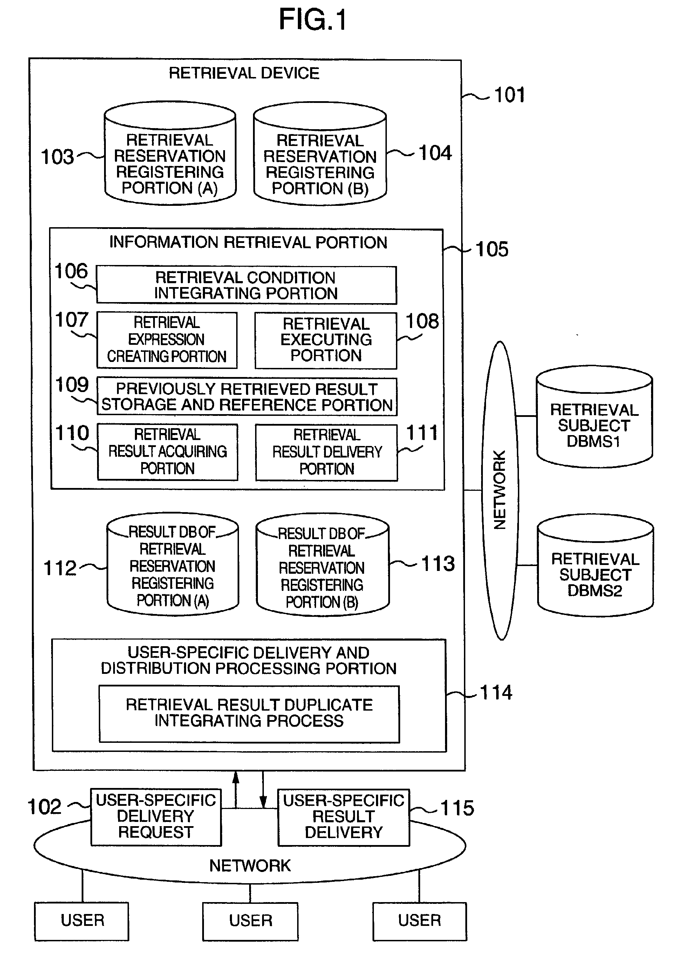

Fig. 1 is a diagram for explaining a configuration of a retrieval device to which the present invention is applied and the operation of retrieval service. In environment in which a plurality of database systems (DBMS) 1, 2,... n as subjects to be retrieved in this system are connected via a network and allowed to be retrieved, users 1, 2, 3,... n in this system can receive service with which the results of retrieval carried out in accordance with retrieval conditions registered in advance by the users 1, 2, 3,... n are delivered through a medium such as electronic mail.

The configuration of a program or respective systems for providing retrieval result delivery service according to the present invention will be described below.

A retrieval reservation registering portion (A) 103 and a retrieval reservation registering portion (B) 104 register reserved retrieval conditions in accordance with user-specific delivery requests 102 set by the users individually in advance. The number of such retrieval reservation registering portions may be equal to the number of the users. As will be described later, however, the user 1 may reuse the reserved retrieval conditions made by the user 2 as they are. In this case, retrieval reservation registering portions may be provided for the two users separately, or one and the same retrieval reservation registering portion may be provided for the two users in order to save resources.

An information retrieval portion 105 executes reserved retrieval in accordance with the contents registered in the retrieval reservation registering portions. The information retrieval portion 105 has the following configuration. A retrieval condition integrating portion 106 checks duplicates among the retrieval conditions in the respective retrieval reservation registering portions. If there are duplicates, the retrieval condition integrating portion 106 integrates these duplicates and sends a result to a retrieval expression creating portion 107.

The retrieval expression creating portion 107 creates retrieval expressions on the basis the given retrieval conditions. In accordance with the retrieval expressions created thus, a retrieval executing portion 108 issues commands. A previously retrieved result storage and reference portion 109 refers to previously retrieved results if a command issued thus needs reference to the previously retrieved results. Otherwise, the previously retrieved result storage and reference portion 109 executes new retrieval. A retrieval result acquiring portion 110 acquires retrieval results and a retrieval result delivery portion 111 delivers the retrieval results to result databases 112 and 113 in the respective retrieval reservation registering portions.

A user-specific delivery and distribution processing portion 114 distributes the retrieval results for delivery to the users respectively. If duplicate results are included in the results to be delivered to the same user, these duplicate results are integrated and the integrated results are then delivered to the user (115).

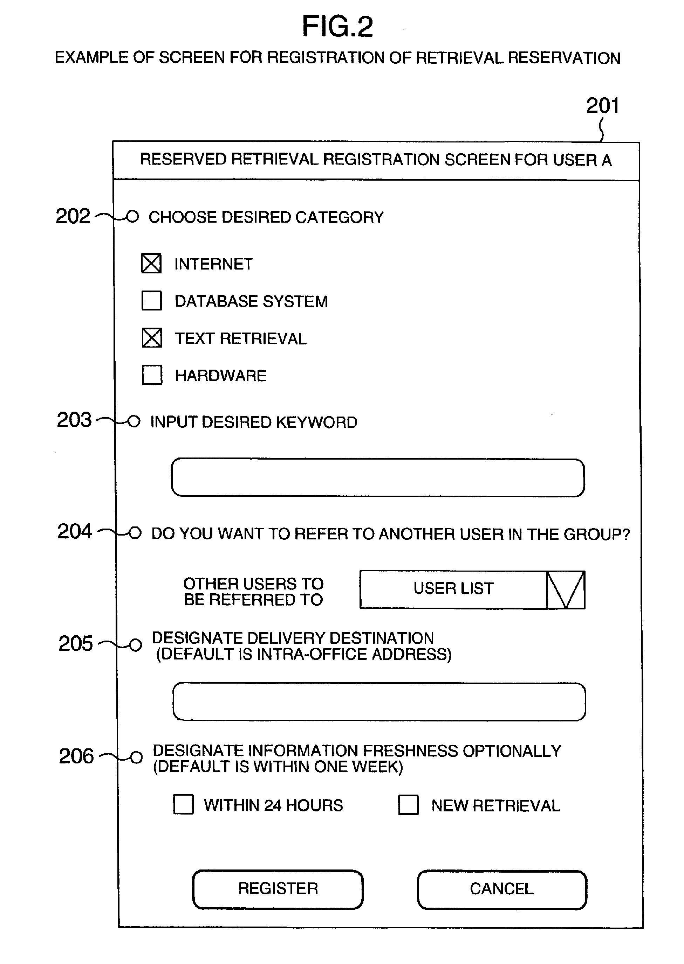

A method for registering retrieval reservation through a user-specific delivery request 102 will be described with reference to Fig. 2 showing an example of a screen for a user interface.

The reference numeral 201 designates an example of a screen for retrieval reservation registration used by a user A. Here, description will be made only on a basic function. The reference numeral 202 designates a heading including items for selecting a retrieval category or categories. For example, category items which are very often used as retrieval conditions by the user may be enumerated thus in advance so as to offer a choice to the users. In such a manner, a load imposed on the users can be lightened. In this example, "Internet" and "text retrieval" have been chosen for reserved retrieval. With regard to the other conditions, a column for the user to input a word or words that the user wants to retrieve may be provided under a heading 203 for accepting designation by word or sentence.

Further, in this column, means for correcting words in case of a word remembered vaguely or in case of wrong spelling may be provided as an auxiliary. When the user cannot properly set a keyword which the user desires to retrieve in the items under the heading 202 or the column under the heading 203, or when the user desires to reuse retrieval conditions which were set by some other user, the user can use an item under a heading 204 so as to refer to information of retrieval reservation registration made the other user.

That is, when the user A chooses and refers to retrieval conditions set by users belonging to a user group to which the user A is allowed to make reference, categories or keywords set by the referred users are displayed so that the respective items can be reused.

The user A may use and register such information as it is, or may edit the information by addition of new items and by deletion of items. A delivery destination of the retrieval results is designated in a column under a heading 205. In this example, the delivery destination is an intra-office mail address according to default setting. Alternatively, setting may be made so that the retrieval results are delivered to a private electronic mail address or transferred to a fax machine. The reference numeral 206 represents a heading for designating an option of information freshness. Here, information freshness means freshness of data to be retrieved.

For example, in the case of reserved retrieval, retrieval may be executed at a predetermined time, such as every week or every day, and the results are registered into a database for full text retrieval. Thus, access is made to the registered data so as to attain higher speed processing. On this occasion, when the information freshness option is provided but no designation is made (default), retrieval is executed from the registered data to thereby acquire the result. In some cases, latest data are, however, desired to be retrieved newly.

For such a case, the information freshness option is provided so that the user can choose how fresh the information is requested. In this example, two kinds of choices, that is, a choice for executing retrieval from the retrieval database created within 24 hours, and a choice for newly and separately executing retrieval from original data (a group of database systems to be retrieved on the network) are displayed. Information under the headings 202 to 206 is designated so that retrieval reservation is registered. The information is then stored and managed in the retrieval reservation registering portion (103).

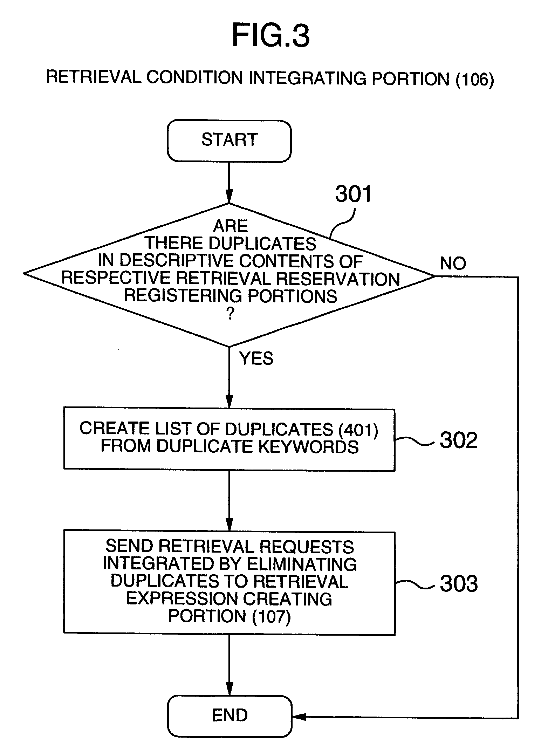

Fig. 3 shows a flow chart of a process in the retrieval condition integrating portion 106. It is checked whether there are duplicates in the descriptive contents of the retrieval conditions registered in the respective retrieval reservation registering portions 103 and 104 or not (301). If there are duplicates, a list of duplicates (401) is created in accordance with duplicate keywords (302). Then, retrieval conditions integrated by eliminating the duplicates from the retrieval conditions are sent, as retrieval requests, to the retrieval expression creating portion 107 (303). Further, if there are no duplicates in Step 301, the routine of process goes to Step 303 directly.

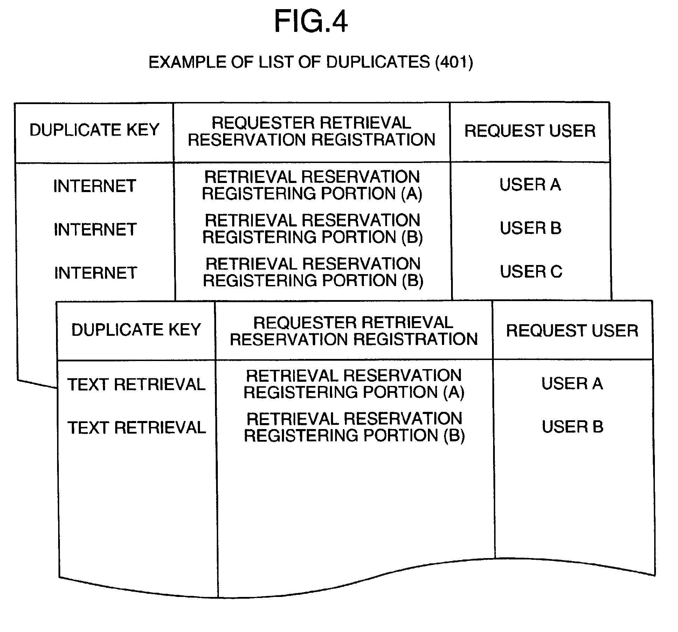

Fig. 4 shows an example of the list of duplicates (401). In this example, users who have made reserved retrieval registration with the keyword "Internet" are three, that is, the user A, the user B and the user C. As for the retrieval reservation registering portions where these three users have registered, the user A has registered at the retrieval reservation registering portion (A), and the users B and C share the retrieval reservation registering portion (B) with each other. Further, users who have made reserved retrieval registration with the keyword "text retrieval" are two, the user A and the user B.

Duplicate keys shown in the list of duplicates in Fig. 4 are integrated in the retrieval condition integrating portion 106. That is, although there are three users who have requested retrieval for "Internet", the retrieval may be executed once. Further, although there are two users who have requested retrieval for "text retrieval", the retrieval may be executed once. After these requests are integrated thus, retrieval expressions are created for one-time retrieval of "Internet" and "text retrieval" by the retrieval expression creating portion 107. Each of the created retrieval expressions is issued as a command by the retrieval executing portion 108.

Although the commands issued thus may be executed directly, the previously retrieved result storage and reference portion 109 carries out its process subsequently in this embodiment. By integrating duplicate requests for retrieval in such a manner, processing in the retrieval server can made at a higher speed and with a lightened load imposed thereon. Methods as disclosed in JP-A-6-60121 may be employed as the details of the integration method of the retrieval condition integrating portion 106, the creation method of the retrieval expression creating portion 107, and the execution method of the retrieval executing portion 108.

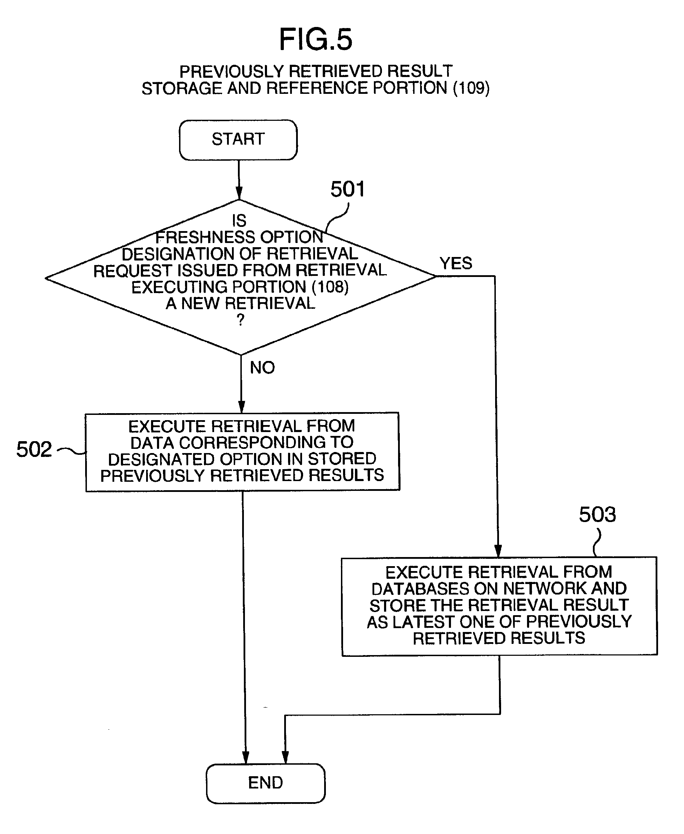

Fig. 5 shows a flow chart of the process in the previously retrieved result storage and reference portion 109. Judgment is made as to whether the freshness option designation in a retrieval request issued from the retrieval executing portion 108 has been made as new retrieval or not (501). If YES, retrieval is executed from the database systems to be retrieved on the network and the retrieval result is stored as a latest one of the previously retrieved results (503). If NO in Step 501, that is, if there was no new retrieval designation, retrieval is executed from the previously retrieved results which have been stored, that is, from the data corresponding to the designated freshness option (such as information within 24 hours or information within one week)(502).

Incidentally, as a method in which the previously retrieved result storage and reference portion 109 executes retrieval from the previously retrieved results, the following method may be employed. In this method, as disclosed in JP-A-6-60121, when there are a plurality of databases to be retrieved, databases to be retrieved are designated, and retrieval is then executed selectively from the designated databases.

After the retrieved results are acquired by the retrieved result acquiring portion 110, the results are delivered to the result databases in the respective retrieval reservation registering portions by the retrieval result delivery portion 111.

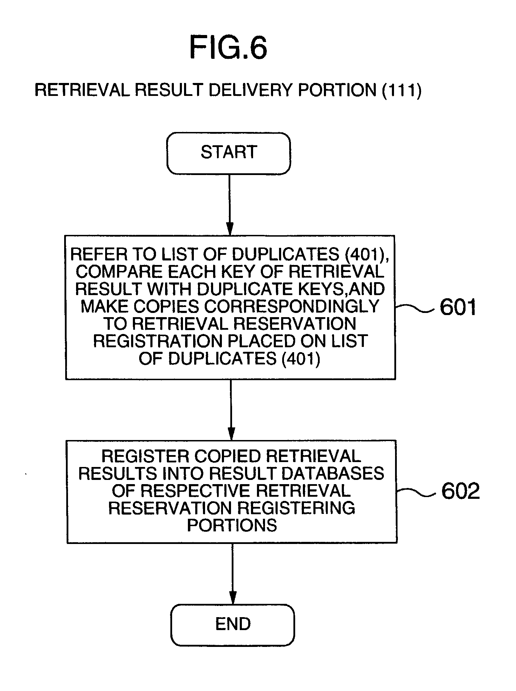

Fig. 6 shows a flow chart of the process in the retrieval result delivery portion 111.

In the retrieval result delivery portion 111 shown in Fig. 6, first, the list of duplicates 401 is referred to so as to compare a key of each retrieval result with duplicate keys. Then, a required number of copies of the retrieval result are made correspondingly to the retrieval reservation registration placed on the list of duplicates (601). The retrieval results copied thus are delivered and registered in the result databases (112 and 113) of the retrieval reservation registering portions respectively (602).

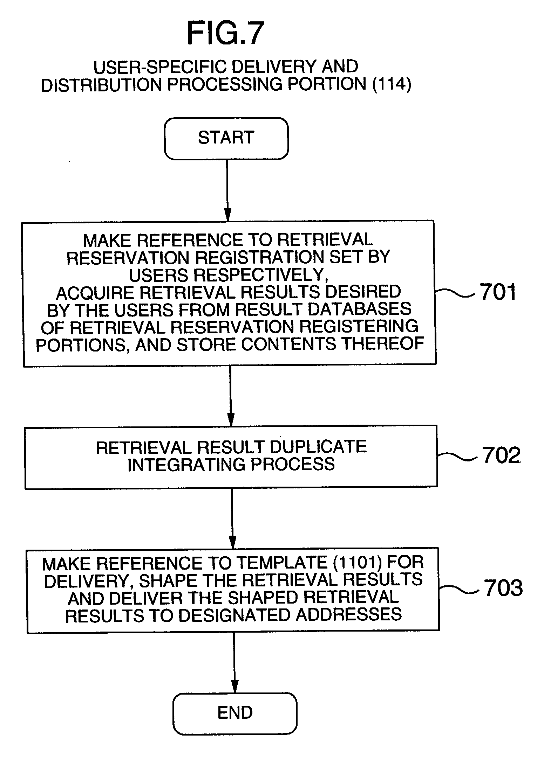

Fig. 7 shows a flow chart of the process in the user-specific delivery and distribution processing portion 114. The retrieval reservation registration set by the respective users in advance is referred to, so that the retrieval results desired by the users respectively are acquired from the result databases of the retrieval reservation registering portions and the contents are stored (701). On the basis of the contents, the routine of process goes to a retrieval result duplicate integrating process (702).

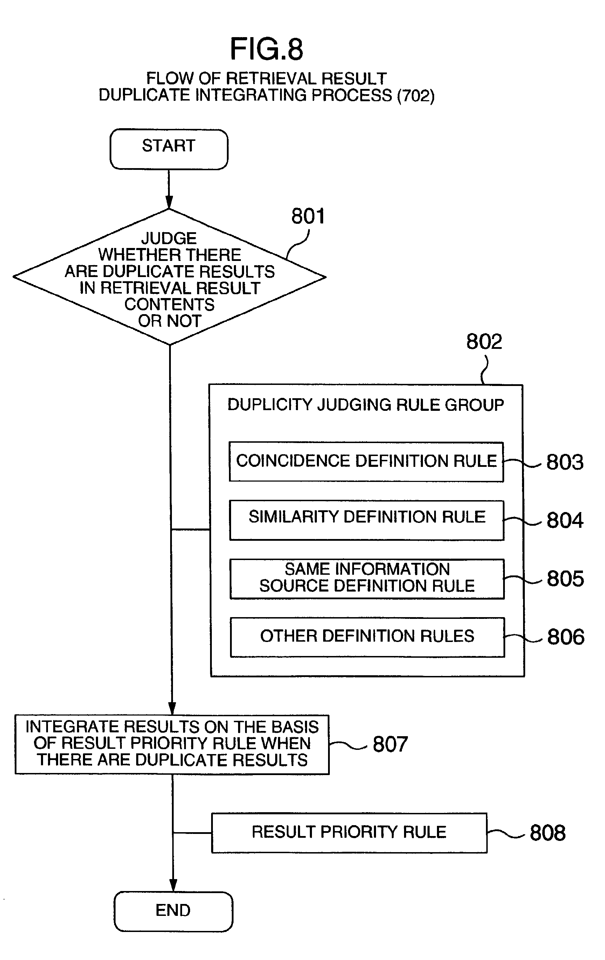

Fig. 8 shows a flow chart of the retrieval result duplicate integrating process (702). First, it is judged whether duplicate results are included in the contents of retrieval results or not (801). This judgment uses a duplicity judging rule group 802 as judgment criteria.

The duplicity judging rule group is, for example, constituted by a coincidence definition rule 803, a similarity definition rule 804, a same information source definition rule 805, other definition rules 806, and so on. Specifically, the coincidence definition rule gives a definition as follows. If the retrieval results coincide with each other or if the coincidence of the full text retrieval results with each other is larger than 80%, the retrieval results are regarded as coincident.

In addition, the similarity definition rule 804 gives a definition as follows. If the similarity between the summaries of retrieval results obtained when the contents of documents are summarized is not smaller than 80%, the results are regarded as similar documents and accordingly as duplicate. Further, the same information source definition rule gives a definition as follows. Retrieval results are regarded as duplicate if data sources from which the retrieval results were acquired derive from one and the same source (for example, an article into which a newspaper publishing company B translated and introduced a public announcement made by a foreign company A and an article into which a newspaper publishing company C translated and introduced the same announcement depict essentially the same contents).

The other definition rules 806 designate rules which can be defined individually on the retrieval device side. On the basis of the duplicity judging rule group 802 described above, it is judged whether there are duplicate results or not. As a result of the judgment, when it is concluded that duplicate results are included, the results are integrated on the basis of a result priority rule (807).

The result priority rule 808 means a rule for determining which result is to be distributed to the user by preference and which result is to be deleted as duplicate data when duplicate results are included. In the example described above, when it is known in advance that translation of the newspaper publishing company B is more accurate in technique than translation of the newspaper publishing company C, setting is made so that priority is given to the article carried by the newspaper publishing company B, while the article carried by the newspaper publishing company C is deleted from the results as duplicate.

Further, for example, the result retrieved for "Internet" and "text retrieval", the result retrieved only for "Internet", and the result retrieved only for "text retrieval" are in inclusion relation and duplicate to each other.

Accordingly, setting is made as follows. That is, priority is given to the retrieval result including both "Internet" and "text retrieval". As a result, whenever information is the same as the information selected as the retrieval result including both "Internet" and "text retrieval", the information is deleted, from the result retrieved only for "Internet" and the result retrieved only for "text retrieval", as duplicate data having the result acquired already.

The retrieval results remaining after deletion of the duplicates in the duplicate retrieval result integrating process 702 are edited and shaped with reference to a template for delivery (1101), and delivered to the addresses designated in advance by the users respectively (703).

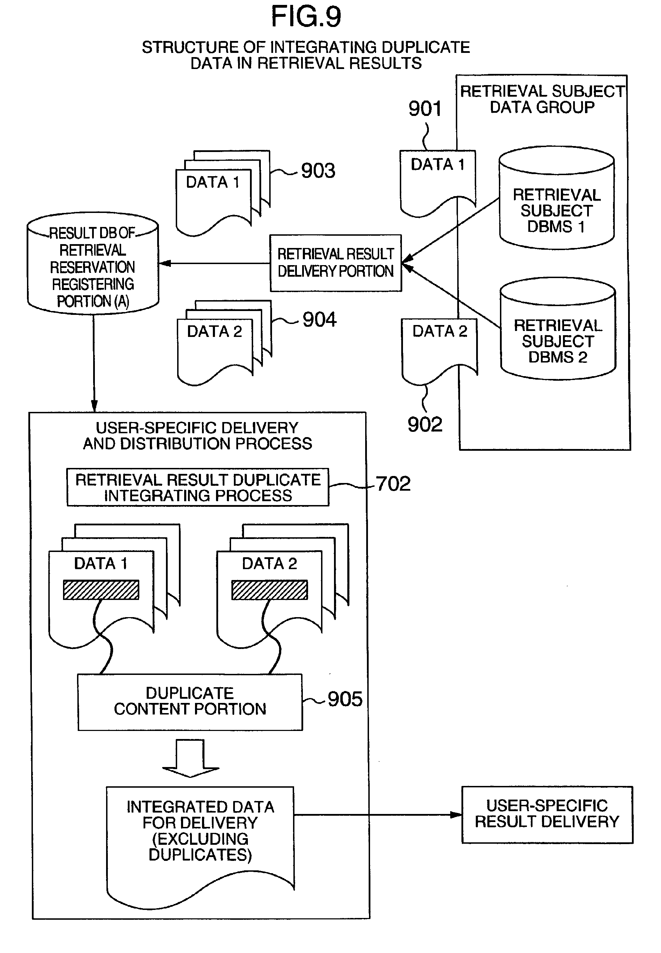

Fig. 9 shows collectively the structure of the retrieval result data duplicate integration described above. A group of data as retrieval subjects (retrieval subject DBMS1 and retrieval subject DBMS2) may be a large unspecified number of original data connected on the network. Alternatively, the group of retrieval subject data may be previously retrieved result databases retrieved and registered in advance as retrieval subjects. Assume here that data 1 and data 2 were acquired as a result of a retrieval process performed on the group of retrieval subjects.

In the retrieval process at this time, duplicates have been eliminated and integrated, so that access to the group of retrieval subject data has been minimized. As a result, retrieval efficiency has been improved and a load imposed on the retrieval server has been lightened. Further, when an accounting system is applied to use of the contents, for example, when a fee charged for retrieval from the retrieval subject DBMS1 per time is ¥ XX, 10 times of ¥ XX are usually accounted for retrieval conducted 10 times. On the contrary, according to the system in this embodiment, the number of times of retrieval is minimized so that accounting can be reduced.

In order to avoid illegal use, it is, however, preferable that operation is made under separate agreements between the retrieval subjects DBMSs and the retrieval service side. For example, only a descriptive portion (list of duplicates 401 or the like) regarding the number of copies to be made afterward is shared, and automatic accounting is made in accordance with the number of copies made. In such a manner, it is possible to provide a method in which a load imposed on both the systems is lightened without any obstacle to the accounting system.

Further, the following method may be also adopted. That is, a budget is preset on the user side, and data acquirement either from the retrieval subject DBMS1 or from the retrieval subject DBMS 2 is selected on the basis of the relation between the accounting and the budget. Retrieval result data 1 and data 2 acquired thus are copied by the required number respectively by the retrieval result delivery portion 111, and registered in the result DB of the retrieval reservation registering portion (A).

In the process in which the registered contents are being delivered and distributed to the users respectively, the retrieval result duplicate integrating process 702 is executed so that duplicate content portions 905 present in the data 1 and the data 2 are integrated by elimination of duplicates. Thus, the integrated data for delivery is delivered to the user as the user-specific result delivery 115.

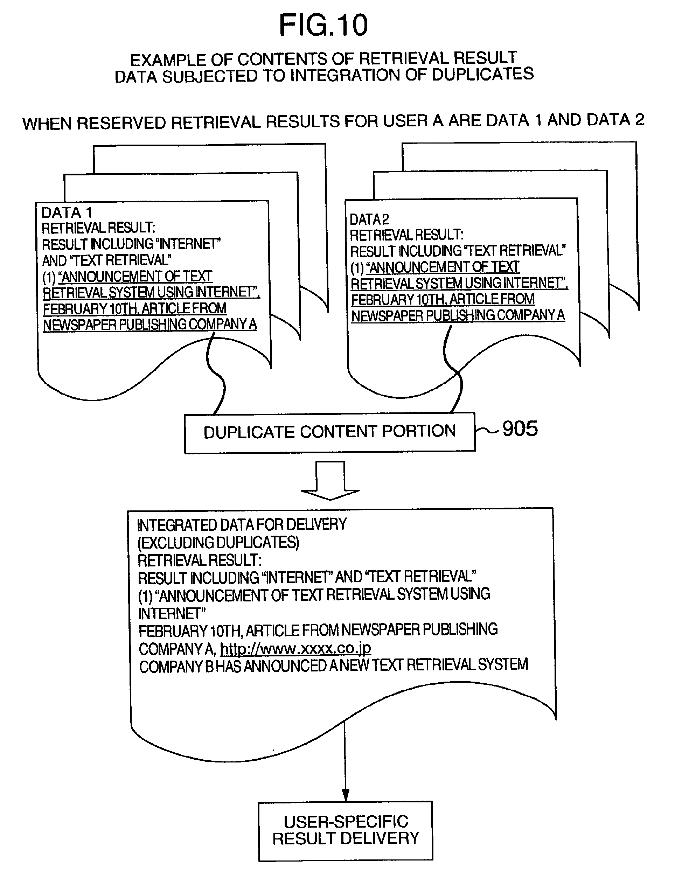

Fig. 10 shows a specific example of the elimination of duplicates.

When reserved retrieval results for the user A are the data 1 and the data 2, in the example of Fig. 10, the article (1) dated on February 10th and carried by the newspaper publishing company A is acquired as the retrieval result including both "Internet" and "text retrieval" in the data 1.

On the other hand, the same article (1) dated on February 10th and carried by the newspaper publishing company A is acquired as the retrieval result including "text retrieval" in the data 2. Accordingly, both retrieval results have the same and duplicate contents. If the retrieval results are delivered to the user as they are, the delivered contents become redundant, too difficult for the user to read, and troublesome.

Thus, data for delivery in which the duplicate content portions 905 are integrated into one by the retrieval result duplicate integrating process 702 is created. In the example of Fig. 10, only the retrieval result of the data 1 is used, while the retrieval result contained in the data 2 and having the same content as that in the retrieval result of the data 1 is eliminated. The integrated data for delivery is delivered as user-specific result delivery.

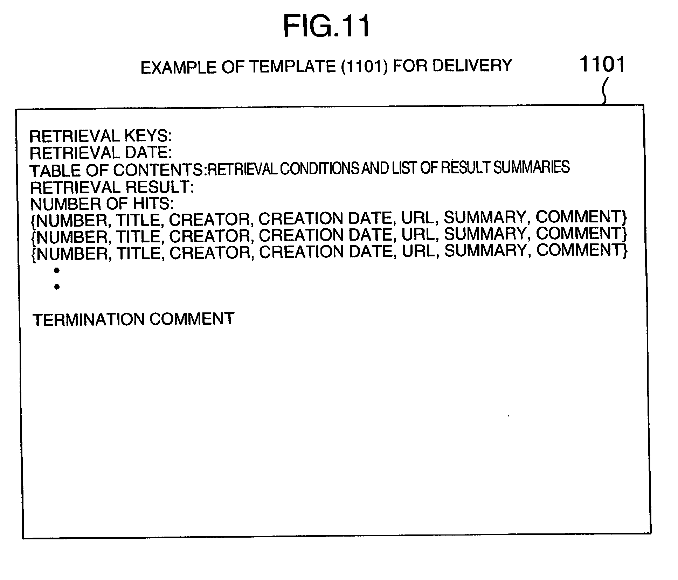

Fig. 11 shows an example of a template 1101 for delivery. This example adopts a format in which keys used for retrieval, retrieval date, table of contents, retrieval result, number of hits, information of retrieval result (title, creator, creation date, URL, summary, comment, and the like) repeated correspondingly to the number of hits, are placed, and a termination comment is outputted finally. Incidentally, the retrieval date described here means the very retrieval date when new retrieval was executed. However, when the previously retrieved results already registered were referred to, the retrieval date discloses to the user the date when the previously retrieved results were retrieved.

The comment in the template of Fig. 11 may be created on the basis of the retrieval results or the comparison result of similarity in accordance with the similarity definition rule.

For example, when the comparison result of similarity of 95% has got between an article regarding the Internet carried by a magazine company α and an article regarding the Internet carried by a magazine company β, a comment to report that which articles were compared and which article was omitted may be made in such a manner that "Similarity between the article regarding the Internet carried by the magazine company α and the article regarding the Internet carried by the magazine company β was 95%. In this result report, the article carried by the magazine company α was placed, but the article carried by the magazine company β was omitted." At that time, a template for such sentences may be stored in advance so that the numerical value of similarity, the number of hits for retrieval, the values for a similarity judgment result and a retrieval result regarding a source of information (information about newspaper publishing company, URL, name of scientific society or the like), the title of article or paper, and so on, can be put into the template respectively.

Further, the comment may be made in accordance with the retrieval result for every retrieval expression, or may be made only when the comment is requested, or may be made whenever the retrieval result is transmitted.

Incidentally, as for the omission of the article, which article to place on the result and which article to omit therefrom may be defined in the duplicity judging rule group 802. For example, when the similarity between the article carried by the newspaper publishing company A and the article carried by the newspaper publishing company B is 85%, definition may be made such that "place the article carried by the newspaper publishing company A, but omit the article carried by the newspaper publishing company B." In this case, a comment may be created automatically in accordance with a rule defined in advance.

Further, when there are a plurality of duplicates in the contents of a plurality of articles, priority for placing the articles may be defined in advance. For example, definition is made such that "if there are duplicates among articles carried by the newspaper publishing companies A, B and C, place the article carried by the newspaper publishing company A, but omit the articles carried by the newspaper publishing companies B and C. If there is a duplicate between articles carried by the newspaper publishing companies B and C, place the article carried by the newspaper publishing company B, but omit the article carried by the newspaper publishing company C." Accordingly, which article to place and which article to omit may be defined in advance in the duplicity judging rule group, so that a comment is formed in accordance with the contents of the duplicity judging rule group.

Incidentally, all the cases described above are examples simply. A template for comment may be prepared separately so that sentences are formed using the template for comment and the duplicity judging rule group 802. Another method may be employed alternatively.

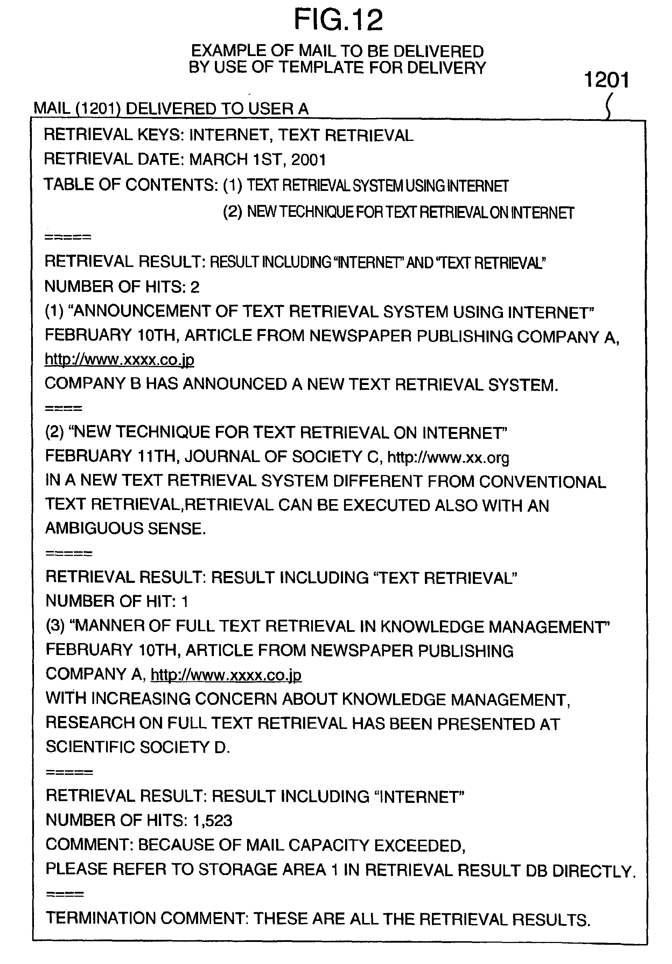

Fig. 12 shows an example of a mail to be delivered by use of the template 1101. A mail 1201 received by the user A is formed as follows. That is, first, "Internet" and "text retrieval" are placed as keys designated by the user A. This is followed by that data retrieved on March 1st, 2001 was used, and the number of hits of retrieval results including both "Internet" and "text retrieval" was 2. Further, this is followed by the information of the two retrieval results. Next, it is placed that the number of hits of retrieval results including "text retrieval" was 1, and this is followed by the information of the retrieval result.

Incidentally, the two pieces of information (1) and (2) which have been hit by the retrieval for "Internet" and "text retrieval" are eliminated from the retrieval result for "text retrieval" because they are duplicate. Further, the information is followed by that the number of hits of retrieval results including "Internet" was 1,523. As shown in the example, when the number of hits is so large that the mail receipt capacity is exceeded, a comment is formed and summaries are refrained from being outputted. Here, the warning "Because of exceeding mail capacity, please refer to Storage Area 1 of Retrieval Result DB directly." is given to avoid redundancy of the electronic mail.

In such a case that the result is so large that the capacity is exceeded, the information is added to the tail of the mail. Thus, there is made a room to devise how to enhance legibility on the user side, how to acquire information quickly, and so on.

As described above, in this embodiment, when reserved retrieval is executed in accordance with retrieval reservation registration made in advance by users respectively, duplicate retrieval conditions among the users are integrated, retrieval expressions are created and then retrieval is executed. Accordingly, there can be obtained an effect that processing in the retrieval server, a large unspecified number of database systems to be retrieved on the network, and the network to connect the retrieval server and the database systems, can be executed at a higher speed and with a lightened load imposed thereon.

Further, according to this embodiment, an information freshness option can be set to execute reserved retrieval. Thus, the case for executing retrieval from data registered in advance, and the case for executing new data retrieval can be processed distinctly, so that there can be obtained an effect that processing in the retrieval server and the network can be executed at a higher speed and with a lightened load imposed thereon.

Incidentally, when a database to be retrieved adopts an accounting system over data acquirement therefrom, there is an economic effect that accounting can be reduced if no particular constraint is imposed. When there are constraints on data use, a usage fee corresponding to the quantity of data copied and used may be paid on the basis of the list of duplicates, or a data use agreement may be made separately.

Further, when the coincidence definition rule 803, the similarity definition rule 804, the same information source definition rule 805 and so on are used, files high in retrieval hit rate can be extracted from retrieval results in different DBs, the contents of the extracted files can be compared on the basis of similarity in their summaries, the result can be edited in accordance with the result of such comparison, and the edited result can be transformed into a format based on the template 1101, or a message in accordance with the retrieval results and the comparison result of similarity can be created. Thus, efforts for arranging the retrieval results can be lightened.

As described above, according to the present invention, when reserved retrieval from documents accumulated in a large unspecified number of databases on the network is executed, if there are duplicates in the registered contents of retrieval conditions in one user or among more users, the duplicates are integrated so that retrieval is executed under the integrated retrieval conditions. Accordingly, there can be obtained an effect that the efficiency in retrieval processing can be increased.

Further, copies of information regarding the acquired retrieval result are made correspondingly to the number of the duplicates among the users so as to meet the retrieval reservation registration desired by the respective users. When there are duplicates in the expanded contents, these duplicates are eliminated from the expanded contents and the expanded contents are then edited in a format desired by each of the users. Accordingly, there can be obtained an effect that the edited result can be delivered to a delivery destination registered in advance by the user.

It should be further understood by those skilled in the art that the foregoing description has been made on embodiments of the invention and that various changes and modifications may be made in the invention without departing from the spirit of the invention and the scope of the appended claims, as interpreted by the description and drawings.

## Claims

1. A retrieval device (101) in a system having computers and databases connected to one another, comprising:
a retrieval reservation registering portion (103, 104) for registering retrieval requests (102) issued by users;
a retrieval device portion (108, 109, 110, 111, 114, 115) for retrieving information from the databases (DBMS1, DBMS2; 112, 113) on the basis of contents of said retrieval request in said registering portion registered and sending retrieval results to said users; and
a retrieval processing portion (106, 114) for integrating duplicates (401, 905) in said retrieval requests in accordance with pre-stored rules and creating data to be sent to said users when information is retrieved from said databases.

2. A retrieval device (101) according to Claim 1, wherein in said retrieval reservation registration, duplicates (401) are checked in said retrieval requests at present and in the past so as to integrate (106) retrieval conditions.

3. A retrieval device (101) according to Claim 1, wherein said retrieval device portion (114, 115) edits said retrieval results in a predetermined format (1101) by user and sends said edited retrieval results to said users respectively on the basis of retrieval conditions desired by said users, said retrieval results being acquired on the basis of said integrated retrieval conditions (106).

4. A retrieval device (101) according to Claim 3, wherein upon edition of said results by user, said retrieval device portion (114, 115) eliminates duplicates (905) from said retrieval results desired by each of said users and integrates said retrieval results when there are said duplicates in contents of said retrieval results, so that said retrieval device portion sends said edited results to said user.

5. A retrieval device (101) according to Claim 2, further comprising a method (109) in which at least one previously retrieved result is held in said retrieval reservation registration, so that, when a user issues a retrieval request (102), said user selects to acquire a retrieval result from said held retrieval result or to execute new retrieval from original data.

6. A retrieval device (101) according to Claim 3 wherein, when there are duplicates (401) in retrieval requests among users and said requests are integrated (106) to thereby acquire a retrieval result, said retrieval device portion (111, 115) makes copies of said retrieval result and sends said retrieval result to said respective users issuing said requests for said acquired retrieval result.

7. A retrieval device (101) according to Claim 1, wherein said retrieval device portion (110, 111) acquires or sends retrieval in accordance with said retrieval reservation registration at predetermined intervals of time.

8. A retrieval method in a system having computers and databases connected to one another, comprising the steps of:
registering retrieval requests (102) issued by users;
retrieving (108, 109, 110, 114, 502, 702) information from databases (DBMS1, DBMS2; 112, 113) on the basis of contents of said registered retrieval requests and sending retrieval (111, 114, 115, 703) results to said users; and
integrating (106, 303, 114, 702) duplicates (401, 905) in said retrieval requests in accordance with pre-stored rules (803, 804, 805, 806) and sending (111, 114, 115, 703) results to said users when information is retrieved from said databases.
